# EUROPEAN PATENT APPLICATION

(11) **EP 4 792 909 A1**
(43) Date of publication of application: **19.08.2026**
(21) Application number: 25223832.4
(22) Date of filing: 16.12.2025
(51) Int. Cl.: B01D 27/08, B01D 29/13

(54) **SPIN-ON FILTER WITH SINGLE PIECE HOUSING AND SNAP-TOGETHER ASSEMBLY**

(30) Priority: 18.02.2025 US 202563759593 P; 05.05.2025 US 202563800017 P; 03.12.2025 US 202519408029
(71) Applicant: Baldwin Filters, Inc., Cleveland, OH 44124 (US)
(72) Inventor: ERICKSON, Brian K., Kearney, 68845 (US); SCHWEITZER, Stephen W., Kearney, 68845 (US)
(74) Representative: Murgitroyd & Company

(57) **Abstract**

A spin-on filter that includes a canister having a cylindrical body, a domed end, and an open end. A filter element is disposed within the canister. The filter element has a central opening that runs a length of the filter element. The filter element further includes a first end cap attached to a first end of the filter element, and situated at the domed end of the canister. A second end cap is attached to a second end of the filter element, and situated at the open end of the canister. The second end cap is an annular plate with a center opening that aligns with the central opening of the filter element. A necked snap plate is configured to attach to the open end of the canister and to the second end cap. The necked snap plate has an inner opening defined by an annular necked portion configured for insertion into the center opening of the second end cap. The necked snap plate also has a plurality of fingers arranged around an outer perimeter of the necked snap plate.

## Description

### CROSS-REFERENCE TO RELATED PATENT APPLICATIONS

This patent application claims the benefit of U.S. Provisional Patent Application No. 63/800,017, filed May 5, 2025, and U.S. Provisional Patent Application No. 63/759,593, filed February 18, 2025, the entire teachings and disclosure of which are incorporated herein by reference thereto.

### FIELD OF THE INVENTION

This invention generally relates to spin-on filters, and more particularly to spin-on filters typically used for filtering particulates and other contaminants from fuel streams.

### BACKGROUND OF THE INVENTION

Conventional spin-on fuel filters are often made using metal housings that require a double-lock seaming process, and further require some type of paint finishing process. These materials and operations can add cost and time to the manufacturing process. Therefore, it would be advantageous to have a fuel filter and method of assembly for such fuel filter that does not include the aforementioned problems. Such a filter and method of assembly would provide significant benefit by reducing the cost and assembly time for the spin-on fuel filter.

Embodiments of the invention provide such a fuel filter. These and other advantages of the invention, as well as additional inventive features, will be apparent from the description of the invention provided herein.

### BRIEF SUMMARY OF THE INVENTION

In one aspect, embodiments of the invention provide a spin-on filter that includes a canister having a cylindrical body, a domed end, and an open end. A filter element is disposed within the canister. The filter element has a central opening that runs a length of the filter element. The filter element further includes a first end cap attached to a first end of the filter element, and situated at the domed end of the canister. A second end cap is attached to a second end of the filter element, and situated at the open end of the canister. The second end cap is an annular plate with a center opening that aligns with the central opening of the filter element. A necked snap plate is configured to attach to the open end of the canister and to the second end cap. The necked snap plate has an inner opening defined by an annular necked portion configured for insertion into the center opening of the second end cap. The necked snap plate also has a plurality of fingers arranged around an outer perimeter of the necked snap plate.

In a particular embodiment, the canister includes threads on an exterior surface at the open end of the canister. In certain embodiments, the first end cap is a flat, circular plate. In a further embodiment, the first end cap has an outer wall that extends axially from a perimeter of the first end cap. In a more particular embodiment, the second end cap has an outer wall that extends axially from a perimeter of the second end cap.

In a further embodiment, the canister includes an annular outward-facing groove configured to receive a ring seal, the groove being axially-spaced from the threads in a direction toward the open end of the canister. The ring seal may be a D-ring seal, where a flat portion of the D-ring seal abuts an outer surface of the outward-facing groove. Alternatively, the ring seal may be an O-ring seal supported by a radially-extending shelf which is axially-spaced from the threads via a reverse bevel.

The necked snap plate may further include, in some embodiments, an annular base that extends radially from the inner opening to the plurality of fingers. Furthermore, the annular base may include a plurality of openings spaced apart around a circumference of the annular base. In typical embodiments, the annular necked portion extends axially in a first direction, and wherein the necked snap plate further includes an annular projection that extends axially in a second direction opposite the first direction. In more particular embodiments, the annular projection has a plurality of support ribs arranged circumferentially around an inner surface of the annular projection. In some embodiments, the annular projection has an outer surface with a groove configured to receive a seal. In a specific embodiment, the seal is an O-ring seal, though other types of seals are envisioned.

In particular embodiments, one or more of the plurality of fingers extend both axially and radially from the outer perimeter of the necked snap plate. Adjacent fingers of the plurality of fingers may be separated by a notch. Additionally, each of the plurality of fingers may be configured to flex radially. Further still, the canister may include an annular rib that extends circumferentially around an inner surface of the canister, and protrudes radially inward from the inner surface, the annular rib being disposed proximate the open end of the canister. The annular rib is continuous around the entire circumference of the inner surface of the canister in some embodiments, while in other embodiments, the annular rib is interrupted at least once around the circumference of the inner surface of the canister. In certain embodiments, the annular rib protrudes at least five one-thousandths of an inch radially inward from the inner surface of the canister. In other embodiments, the annular rib protrudes an average of five one- thousandths of an inch radially inward from the inner surface of the canister.

In some embodiments, the canister includes a plurality of axially-extending ribs angularly-spaced apart around the circumference of an inner surface of the canister, the axially-extending ribs protruding radially inward from the inner surface. Furthermore, each of the axially-extending ribs may protrude at least 0.020 of an inch radially inward from the inner surface. In other embodiments, wherein each of the axially-extending ribs protrudes an average of 0.020 of an inch radially inward from the inner surface. In some embodiments, the canister is made from molded plastic. In other embodiments, the necked snap plate is made from molded plastic.

In another aspect, embodiments of the invention provide a spin-on filter that includes a canister circumscribing a central axis and having a domed end, an open end, threads on an outer surface of the canister toward the open end. The canister also includes a retention device along an inner surface of the canister also toward the open end, and a series of axial ribs along the inner surface of the canister, with distal axial ends of the axial ribs facing the open end and spaced axially inward from the retention device. A filter element is located within the canister. A snap plate retains the filter element within the canister. The snap plate includes: i) an annular base supported against the distal axial ends of the ribs; and ii) a series of resilient fingers protruding axially and radially away from the base in engagement with the retention device, fixing the snap plate axially within the canister.

In particular embodiments, the retention device comprises one of a circumferential rib or annular shoulder.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a cross-sectional view of a spin-on filter, constructed in accordance with an embodiment of the invention;
FIG. 2 is a perspective view of a necked snap plate used in the spin-on filter of FIG. 1, in accordance with an embodiment of the invention;
FIG. 3 is a perspective view of a portion of the spin-on filter canister, according to an embodiment of the invention;
FIG. 4 is a perspective cross-sectional view of the filter element base plate, according to an embodiment of the invention;
FIG. 5 is a perspective cross-sectional view of the necked snap plate assembled to the filter element base plate, according to an embodiment of the invention;
FIG. 6 is a perspective cross-sectional view of a portion of the spin-on filter, according to an embodiment of the invention;
FIG. 7 is a cross-sectional view of the portion of the spin-on filter where the necked snap plate attaches to the filter element, according to an embodiment of the invention;
FIG. 8 is an enlarged cross-sectional view of the portion of the spin-on filter of FIG. 7, according to an embodiment of the invention;
FIG. 9 is a cross-sectional view of the spin-on filter attached to a filter head, in accordance with an embodiment of the invention;
FIG. 10 is a perspective view of an alternate embodiment of the necked snap plate used in the spin-on filter, according to an embodiment of the invention;
FIG. 11 is a plan view of the alternate embodiment of the necked snap plate shown in FIG. 10; and
FIG. 12 is a cross-sectional view of an alternate embodiment of the spin-on filter including an enlarged cross-sectional view of a portion of the spin-on filter.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION OF THE INVENTION

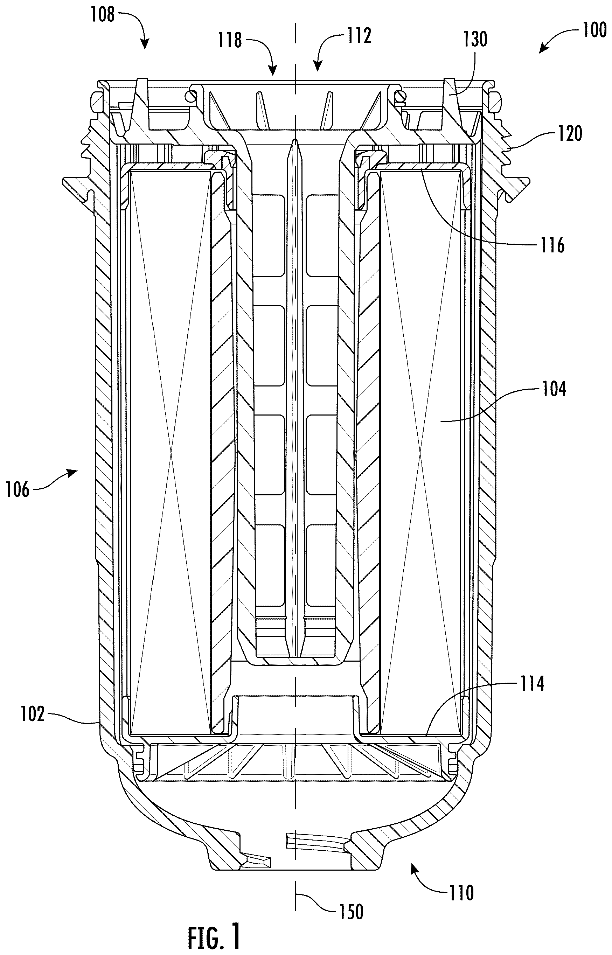

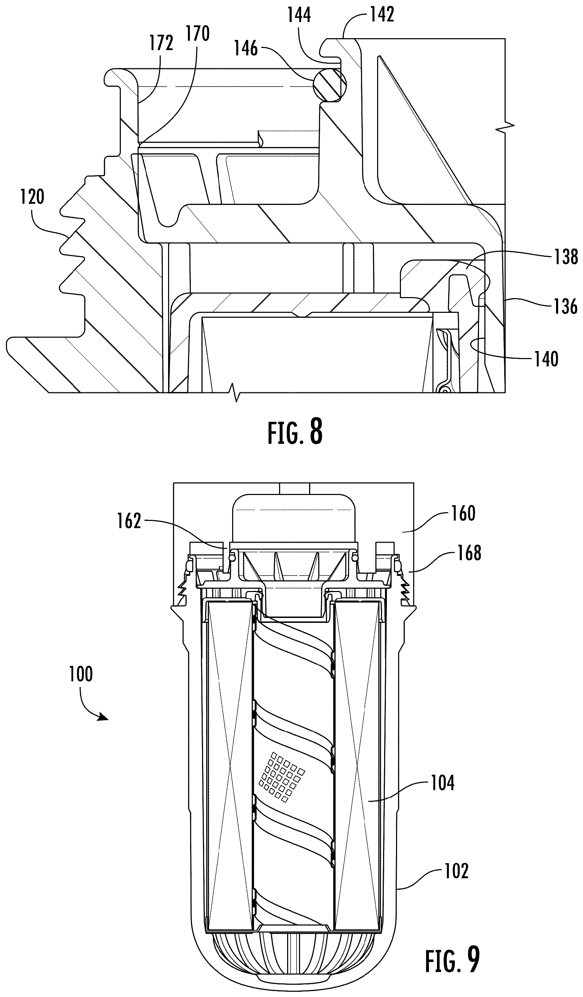

FIG. 1 shows a cross-sectional view of a spin-on filter 100, constructed in accordance with an embodiment of the invention. The spin-on filter 100 has a canister 102 that houses a filter element 104. In typical embodiments of the invention, the canister 102 is made from plastic, and is molded as a single finished piece. The canister 102 has a cylindrical body 106 with an open end 108 and a domed end 110, which in the embodiment shown is convex or rounded. The open end 108 of the canister 102 is threaded, the threads 120 providing means for attachment to a filter head 160 (see FIG. 9). As shown in various figures, the threads are provided on an exterior surface of the canister 102 at or proximate the open end 108.

In this embodiment, the filter element 104 is cylindrical like the canister body 106, with a central opening 112 that runs the length of the filter element 104. The filter element 104 further includes two end caps attached at each end of the filter element 104. The first end cap is an end plate 114 attached to the end of the filter element 104 situated at the domed end 110 of the canister 102. In a typical embodiment, the end plate 114 is a mostly, or entirely, flat, circular plate. In some embodiments, end plate 114 is a flat plate with no openings, while in other embodiments the end plate 114 has an opening to allow water, separated from the fuel being filtered, to drain into a sump. The end plate 114 may also include an outer wall that extends axially from a perimeter of the end plate 114 such that the outer wall surrounds an end portion of the filter element 104. The end plate 114 may be configured to prevent fluid flowing through the spin-on filter 100 from bypassing the filter element 104 if the end plate 114 has no openings, or if the end plate 114 has an opening for water drainage, fluid is prevented from bypassing the filter element 104 by an outward-facing seal that seals against the canister.

In certain embodiments, the second end cap on the filter element 104 is an annular base plate 116 attached to the end of the filter element 104, and situated at the open end 108 of the canister 102. In typical embodiments, the annular base plate 116 is a mostly, or entirely, flat, annular plate with a center opening 118 that corresponds, in size and position, to the central opening 112 of the filter element 104. Like the end plate 114, the annular base plate 116 may include an outer wall extending axially from an outer perimeter of the base plate 116 such that the outer wall surrounds an end portion of the filter element 104 opposite the end portion surrounded by the outer wall of the end plate 114. The end plate 114 and annular base plate 116 may be attached to their respective ends of the filter element 104 using an adhesive or potting compound. In alternate embodiments of the invention, the end plate 114 and annular base plate 116 can be attached to their respective ends of the filter element 104 via an embedded attachment.

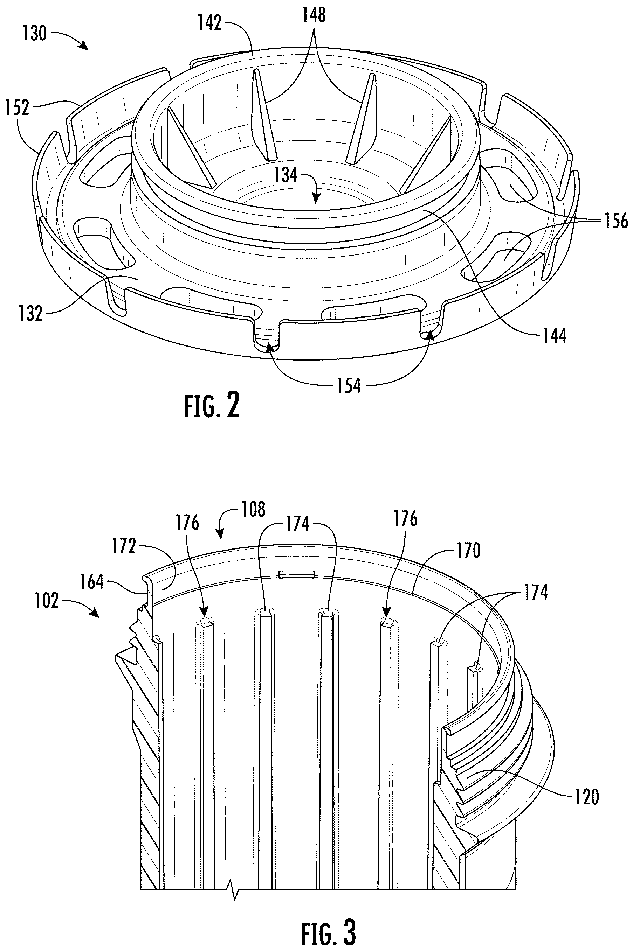

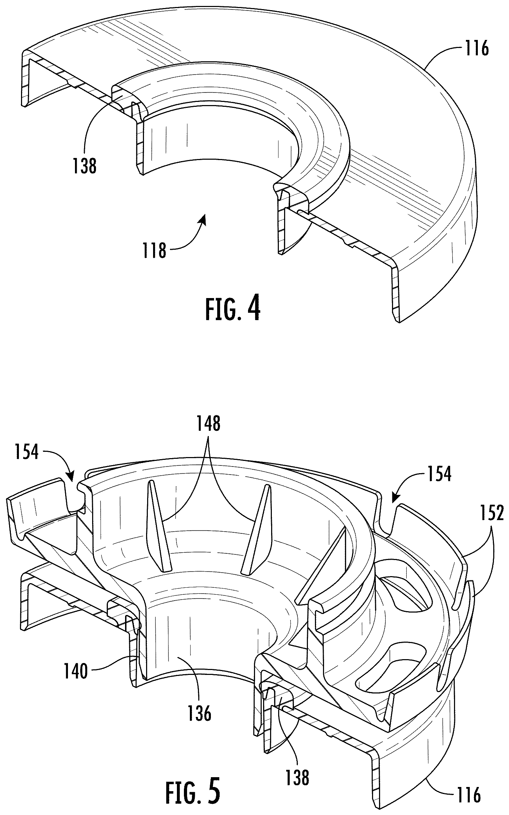

A necked snap plate 130 is attached to the open end 108 of the canister 102 and to the annular base plate 116. FIG. 2 shows a perspective view of the necked snap plate 130 used in the spin-on filter 100 of FIG. 1, in accordance with an embodiment of the invention. FIG. 4 shows a perspective cross-sectional view of the annular base plate 116, according to an embodiment of the invention. The necked snap plate 130 has an annular base 132 that defines an inner opening 134 configured to align with the central opening 112 of the filter element 104 and the center opening 118 of the annular base plate 116, respectively. The snap plate 130 includes an annular neck portion 136 that defines the inner opening 134 and projects axially from an inner perimeter of the annular base 132, and surrounds the inner opening 134. As used herein, the term "axially" refers to a direction along, or parallel to a longitudinal axis 150 of the spin-on filter, as shown in FIG. 1. The term "radially" refers to any direction extending perpendicularly from the longitudinal axis 150 when the longitudinal axis 150 is located at the center of the spin-on filter 100, as shown in FIG. 1.

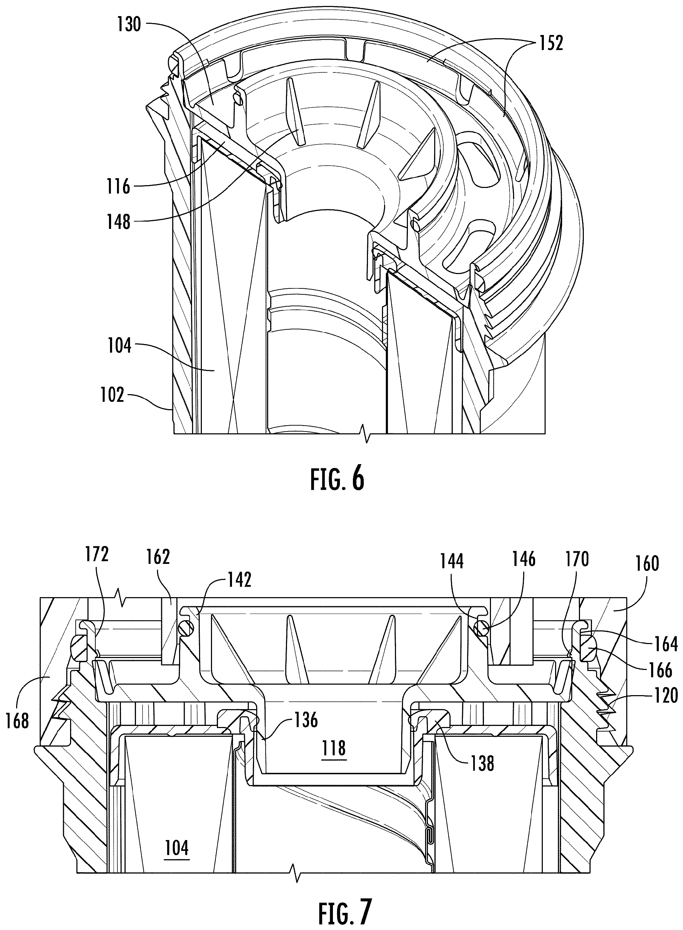

FIG. 5 is a perspective cross-sectional view of the necked snap plate 130 assembled to the annular base plate 116, in accordance with an embodiment of the invention. FIG. 6 also shows a perspective cross-sectional view of the necked snap plate 130 assembled to the annular base plate 116, but also includes a portion of the filter element 104 and canister 102 in this view. FIG. 7 illustrates a more detailed cross-sectional view of the portion of the spin-on filter where the necked snap plate attaches to the filter element, while FIG. 8 shows an even more enlarged cross-sectional view of a portion of the spin-on filter shown in FIG. 7. During assembly of the snap plate 130 to the canister 102, the neck portion 136 is received within the center opening 118 of the annular base plate 116. A seal 138 supported within the center opening 118 of the annular base plate 116 seals against an outer surface 140 of the neck portion 136.

The necked snap plate 130 also has an annular projection 142 that extends axially away from the upper surface of the annular base 132. As shown in FIG. 2, the annular projection 142 has an outwardly-facing groove 144 which supports an annular gasket or O-ring 146. The annular projection 142 is configured to engage with another annular projection 162 on the filter head 160 that extends axially away (or downward as illustrated in FIG. 9) from the filter head 160 in close surrounding relationship to the annular projection 142 from the snap plate 130. A gasket or seal, such as an O-ring 146, provides a seal between the snap plate 130 and filter head 160. The canister 102 likewise has an annular groove 164 on an outer surface of the canister 102 between the threads 120 and the open end 108. A D-ring gasket or seal 166 is located in this groove 164, which provides a seal along an inner surface of an outer ring 168 of the filter head 160. The flat portion of the D-ring seal 166 abuts the groove surface. As shown in FIGS. 2, 5, and 6, the annular projection 142 may be supported by a plurality of support ribs 148 evenly spaced around the circumference of an inner wall, or inner surface, of the annular projection 142. The support ribs 148 may be substantially triangular in shape, as in the embodiment shown, though other shapes for this element are envisioned.

Along its circular outer perimeter, the snap plate 130 includes resilient, cantilevered fingers 152, evenly-spaced apart from one another and arranged around a circumference of the annular base 132. The fingers 152, protrude both axially and radially (i.e., at an angle) from the outer perimeter of the snap plate 130. In the embodiment of FIG. 2, a U-shaped notch 154 separates adjacent fingers 152. In typical embodiments, the snap plate 130 is made from molded plastic. The material and the notches 154 separating the adjacent fingers 152 is such that each of the fingers 152 can flex radially. This radial movement of the fingers 152 allows for the fingers 152 to flex inward to allow assembly of the snap plate 130 to the canister 102, and to flex outward to prevent disassembly, or separation, of the snap plate 130 from the canister 102. As shown in FIG. 2, the annular base 132 may include a plurality of openings 156 spaced apart around the circumference of the annular base 132. In the embodiment shown, the openings 156 are arcuate, but could be shaped differently in alternate embodiments of the snap plate 130. The plurality of openings 156 serves to allow inlet fluid flow from the filter head 160 (see FIG. 9) to the filter element 104.

FIG. 3 is a perspective view of a portion of the spin-on filter canister 102, according to an embodiment of the invention. As shown in FIG. 3, the threaded canister 102 includes a retention device comprising an annular rib 170 extending circumferentially around the inner surface 172 of the canister 102 proximate the open end 108 of the canister 102. The annular 170 rib may be continuous around the entire circumference of the inner surface 172 of the canister 102. In alternate embodiments, the annular rib 170 is interrupted at least once around the circumference of the inner surface 172 of the canister 102. In certain embodiments, the annular rib 170 protrudes approximately 0.005 of an inch proud (i.e., radially inward) of the inner surface 172. In some embodiments, the annular rib 170 protrudes at least 0.005 of an inch radially inward from the inner surface 172, while in other embodiments, the annular rib 170 protrudes an average of 0.005 of an inch radially inward. The annular rib 170 preferably extends continuously around the inner surface 172, although it could be interrupted. In alternative embodiments of the invention, the retention device could comprise an undercut, annular shoulder along the inner surface of the canister.

Multiple axially-extending ribs 174 are also provided along the inner surface 172 of the canister 102. The axially-extending ribs 174 are angularly-spaced apart around the circumference of the inner surface 172. Also, the axially-extending ribs 174 protrude radially inward from the inner surface 172 of the canister 102. In typical embodiments, each of the ribs protrudes approximately 0.020 of an inch proud of the inner surface 172. In some embodiments, each of the axially-extending ribs 174 protrudes at least 0.020 of an inch radially inward from the inner surface 172, while in other embodiments, each of the axially-extending ribs 174 protrudes an average of 0.020 of an inch radially inward. The axially-extending ribs 174 extend axially a distance along the inner surface of the canister 102 and, in some embodiments, extend along the entire inner axial extent of the canister 102 to locate the filter element 104 centrally within the canister 102 when assembled. In alternative embodiments of the invention, the axially-extending ribs 174 can be simple radial projections arranged circumferentially around the inner surface 172 of the canister 102. The upper distal ends 176 of the axially-extending ribs 174 facing the open end 108 of the canister 102 are in axial alignment, circumferentially around in the inner surface 172.

The annular rib 170 and the axially-extending ribs 174 are spaced axially apart at the open end 108 of the canister 102 such that, when the necked snap plate 130 is forced down through the open end 108 of the canister 102, as shown in FIGS. 6, 7, and 8, a perimeter portion of the annular base 132 of the snap plate 130 is located and supported against the upper distal ends 176 of the axially-extending ribs 174. At the same time, the fingers 152 are closely received and snap under the annular rib 170, to securely prevent the snap plate 130 from axial movement within the canister 102. The annular rib 170 and axially-extending ribs 174 allow the snap plate 130 to be pressed into the threaded canister 102, but prevent the snap plate 130 from being pulled out of the canister 102 once the fingers 152 of the snap plate 130 slide past the annular rib 170.

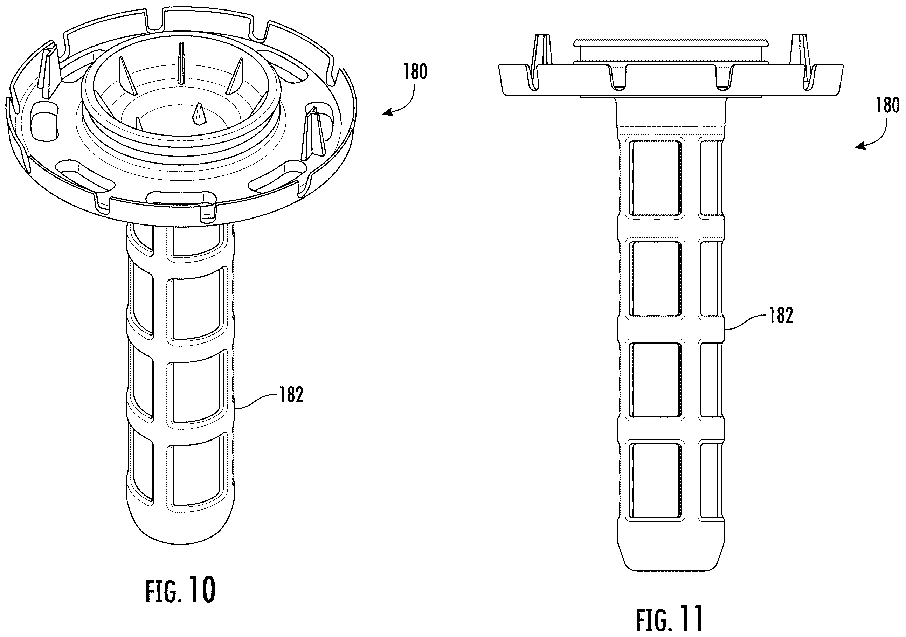

FIG. 10 is a perspective view of an alternate embodiment of the necked snap plate 180 used in the spin-on filter 100, according to an embodiment of the invention, while FIG. 11 is a plan view of the alternate embodiment of the necked snap plate 180 shown in FIG. 10. As shown in FIGS. 10 and 11, the snap plate 180 can optionally include an elongated, axially-extending support tube 182 with hydrophobic mesh integrated with the snap plate 180, with applications in, for example, fuel-water separation. Though optional, the axially-extending support tube 182 is depicted in the exemplary embodiments of the spin filter 100 shown in FIGS. 1 and 9.

The filter element 104 is allowed to float axially inside the threaded canister 102 while maintaining a liquid seal that separates the clean filtered fuel from the dirty fuel within the spin-on filter assembly 100. During assembly, the neck portion 136 on the snap plate 130 self-aligns, concentrically, with the filter element 104 and the threaded canister 102 while snapping permanently into its final axial position within the threaded canister 102.

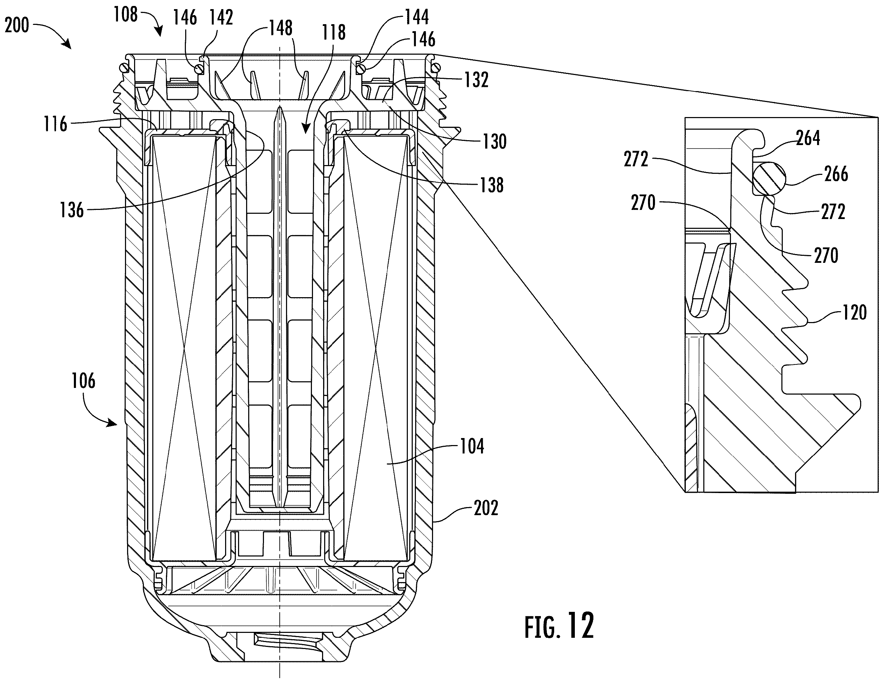

FIG. 12 is a cross-sectional view of an alternate embodiment of a spin-on filter 200 showing an enlarged cross-sectional view of a portion of the spin-on filter 200. As with the embodiment of FIGS 7 and 8 described above, during assembly of the snap plate 130 to the canister 202, the neck portion 136 is received within the center opening 118 of the annular base plate 116. The seal 138 is supported within the center opening 118 of the annular base plate 116, and seals against an outer surface 140 of the neck portion 136. The necked snap plate 130 also has an annular projection 142 that extends axially away from the upper surface of the annular base 132. As shown in FIG. 2, the annular projection 142 has an outwardly-facing groove 144 which supports an annular gasket or O-ring 146. The annular projection 142 is configured to engage with another annular projection 162 (*see* FIG. 7) on the filter head 160 (*see* FIG. 7) that extends radially inward from the filter head 160 in close surrounding relationship to the annular projection 142 from the snap plate 130. The O-ring 146, provides a seal between the snap plate 130 and the filter head 160. As also shown in FIGS. 2, 5, and 6, the annular projection 142 may be supported by a plurality of support ribs 148 evenly spaced around the circumference of an inner wall, or inner surface, of the annular projection 142. The support ribs 148 may be substantially triangular in shape, as in the embodiment shown, though other shapes for this element are envisioned.

As in the embodiment described above, the canister 202 has an annular outwardly-facing groove 264 on an outer surface of the canister 202 between the threads 120 and the open end 108. An O-ring gasket or seal 266 is located in this groove 264, which provides a seal along an inner surface of an outer ring 168 of the filter head 160. The embodiment of FIGS. 7 and 8 used a D-ring 166 for this seal. The embodiment of FIG. 12 includes a radially- or laterally-extending shelf 270 at one end of the groove 264 to support the O-ring 266, which is wider than the D-ring 166. The laterally-extending shelf 270 is supported by a reverse bevel 272 that extends axially and outwardly from the top of the threads 120 to the shelf 270.

The threaded canister 202 includes a retention device comprising an annular rib 270 extending circumferentially around the inner surface 272 of the canister 202 proximate the open end 108 of the canister 202. The annular 270 rib may be continuous around the entire circumference of the inner surface 272 of the canister 102. In alternate embodiments, the annular rib 270 is interrupted at least once around the circumference of the inner surface 272 of the canister 202. In certain embodiments, the annular rib 270 protrudes approximately 0.005 of an inch proud (i.e., radially inward) of the inner surface 272. In some embodiments, the annular rib 270 protrudes at least 0.005 of an inch radially inward from the inner surface 272, while in other embodiments, the annular rib 270 protrudes an average of 0.005 of an inch radially inward. The annular rib 270 preferably extends continuously around the inner surface 272, although it could be interrupted.

Further aspects and embodiments of this disclosure are detailed in the following numbered clauses:
1. A spin-on filter, comprising:
   a canister having a cylindrical body, a domed end, and an open end;
   a filter element disposed within the canister, the filter element having a central opening that runs a length of the filter element, the filter element further including:
      a first end cap attached to a first end of the filter element, and situated at the domed end of the canister; and
      a second end cap attached to a second end of the filter element, and situated at the open end of the canister, wherein the second end cap is an annular plate with a center opening that aligns with the central opening of the filter element; and
      a necked snap plate configured to attach to the open end of the canister and to the second end cap, the necked snap plate having an inner opening defined by an annular necked portion configured for insertion into the center opening of the second end cap, the necked snap plate also having a plurality of fingers arranged around an outer perimeter of the necked snap plate.
2. The spin-on filter of clause 1, wherein the canister includes threads on an exterior surface at the open end of the canister.
3. The spin-on filter of clause 2, wherein the canister includes an annular outward-facing groove configured to receive a ring seal, the groove being axially-spaced from the threads in a direction toward the open end.
4. The spin-on filter of clause 3, wherein the ring seal is a D-ring seal, where a flat portion of the D-ring seal abuts an outer surface of the outward-facing groove.
5. The spin-on filter of clause 3, wherein the ring seal is an O-ring seal supported by a radially-extending shelf which is axially-spaced from the threads via a reverse bevel.
6. The spin-on filter of clause 1, wherein the first end cap is a flat, circular plate.
7. The spin-on filter of clause 6, wherein the first end cap has an outer wall that extends axially from a perimeter of the first end cap.
8. The spin-on filter of clause 6, wherein the second end cap has an outer wall that extends axially from a perimeter of the second end cap.
9. The spin-on filter of clause 1, wherein the necked snap plate further includes an annular base that extends radially from the inner opening to the plurality of fingers.
10. The spin-on filter of clause 9, wherein the annular base includes a plurality of openings spaced apart around a circumference of the annular base.
11. The spin-on filter of clause 9, wherein the annular necked portion extends axially in a first direction, and wherein the necked snap plate further includes an annular projection that extends axially in a second direction opposite the first direction.
12. The spin-on filter of clause 11, wherein the annular projection has a plurality of support ribs arranged circumferentially around an inner surface of the annular projection.
13. The spin-on filter of clause 11, wherein the annular projection has an outer surface with a groove configured to receive a seal.
14. The spin-on filter of clause 1, wherein one or more of the plurality of fingers extend both axially and radially from the outer perimeter of the necked snap plate.
15. The spin-on filter of clause 14, wherein adjacent fingers of the plurality of fingers are separated by a notch.
16. The spin-on filter of clause 14, wherein each of the plurality of fingers is configured to flex radially.
17. The spin-on filter of clause 1, wherein the canister includes an annular rib that extends circumferentially around an inner surface of the canister, and protrudes radially inward from the inner surface, the annular rib being disposed proximate the open end of the canister.
18. The spin-on filter of clause 17, wherein the annular rib protrudes at least five one-thousandths of an inch radially inward from the inner surface of the canister.
19. The spin-on filter of clause 17, wherein the annular rib protrudes an average of five one-thousandths of an inch radially inward from the inner surface of the canister.
20. The spin-on filter of clause 17 wherein the annular rib is continuous around the entire circumference of the inner surface of the canister.
21. The spin-on filter of clause 17, wherein the annular rib is interrupted at least once around the circumference of the inner surface of the canister.
22. The spin-on filter of clause 1, wherein the canister includes a plurality of axially-extending ribs angularly-spaced apart around the circumference of an inner surface of the canister, the axially-extending ribs protruding radially inward from the inner surface.
23. The spin-on filter of clause 22, wherein each of the axially-extending ribs protrudes at least 0.020 of an inch radially inward from the inner surface.
24. The spin-on filter of clause 22, wherein each of the axially-extending ribs protrudes an average of 0.020 of an inch radially inward from the inner surface.
25. The spin-on filter of clause 1, wherein the canister is made from molded plastic.
26. The spin-on filter of clause 1, wherein the necked snap plate is made from molded plastic.
27. A spin-on filter, comprising:
   a.a canister circumscribing a central axis and having a domed end, an open end, threads on an outer surface of the canister toward the open end, a retention device along an inner surface of the canister also toward the open end, and a series of axial ribs along the inner surface of the canister, with distal axial ends of the axial ribs facing the open end and spaced axially inward from the retention device;
   b.a filter element located within the canister; and
   c. a snap plate retaining the filter element within the canister, the snap plate including i) an annular base supported against the distal axial ends of the ribs, and ii) a series of resilient fingers protruding axially and radially away from the base in engagement with the retention device, fixing the snap plate axially within the canister.
28. The spin-on filter as in clause 27, wherein the retention device comprises one of a circumferential rib or annular shoulder.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A spin-on filter, comprising:
a canister having a cylindrical body, a domed end, and an open end;
a filter element disposed within the canister, the filter element having a central opening that runs a length of the filter element, the filter element further including:
a first end cap attached to a first end of the filter element, and situated at the domed end of the canister; and
a second end cap attached to a second end of the filter element, and situated at the open end of the canister, wherein the second end cap is an annular plate with a center opening that aligns with the central opening of the filter element; and
a necked snap plate configured to attach to the open end of the canister and to the second end cap, the necked snap plate having an inner opening defined by an annular necked portion configured for insertion into the center opening of the second end cap, the necked snap plate also having a plurality of fingers arranged around an outer perimeter of the necked snap plate.

2. The spin-on filter of claim 1, wherein the canister includes threads on an exterior surface at the open end of the canister.

3. The spin-on filter of claim 2, wherein the canister includes an annular outward-facing groove configured to receive a ring seal, the groove being axially-spaced from the threads in a direction toward the open end.

4. The spin-on filter of claim 3, wherein the ring seal is a D-ring seal, where a flat portion of the D-ring seal abuts an outer surface of the outward-facing groove.

5. The spin-on filter of claim 3, wherein the ring seal is an O-ring seal supported by a radially-extending shelf which is axially-spaced from the threads via a reverse bevel.

6. The spin-on filter of any preceding claim, wherein the first end cap is a flat, circular plate.

7. The spin-on filter of claim 6, wherein the first end cap has an outer wall that extends axially from a perimeter of the first end cap, and
the second end cap has an outer wall that extends axially from a perimeter of the second end cap.

8. The spin-on filter of any preceding claim, wherein the necked snap plate further includes an annular base that extends radially from the inner opening to the plurality of fingers.

9. The spin-on filter of claim 8, wherein the annular base includes a plurality of openings spaced apart around a circumference of the annular base.

10. The spin-on filter of claim 8 or claim 9, wherein the annular necked portion extends axially in a first direction, and wherein the necked snap plate further includes an annular projection that extends axially in a second direction opposite the first direction.

11. The spin-on filter of claim 10, wherein the annular projection has a plurality of support ribs arranged circumferentially around an inner surface of the annular projection.

12. The spin-on filter of claim 10 or claim 11, wherein the annular projection has an outer surface with a groove configured to receive a seal.

13. The spin-on filter of any preceding claim, wherein one or more of the plurality of fingers extend both axially and radially from the outer perimeter of the necked snap plate.

14. The spin-on filter of claim 13, wherein adjacent fingers of the plurality of fingers are separated by a notch, and each of the plurality of fingers is configured to flex radially.

15. The spin-on filter of any preceding claim, wherein the canister includes an annular rib that extends circumferentially around an inner surface of the canister, and protrudes radially inward from the inner surface, the annular rib being disposed proximate the open end of the canister.

16. The spin-on filter of claim 15, wherein the annular rib protrudes at least five one-thousandths of an inch radially inward from the inner surface of the canister.

17. The spin-on filter of claim 15 or claim 16, wherein the annular rib is continuous around the entire circumference of the inner surface of the canister.

18. The spin-on filter of claim 15 or claim 16, wherein the annular rib is interrupted at least once around the circumference of the inner surface of the canister.

19. The spin-on filter of any preceding claim, wherein the canister includes a plurality of axially-extending ribs angularly-spaced apart around the circumference of an inner surface of the canister, the axially-extending ribs protruding radially inward from the inner surface.

20. The spin-on filter of claim 19, wherein each of the axially-extending ribs protrudes at least 0.020 of an inch radially inward from the inner surface.
